# EUROPEAN PATENT APPLICATION

(11) **EP 4 364 895 A1**
(43) Date of publication of application: **08.05.2024**
(21) Application number: 23188224.2
(22) Date of filing: 27.07.2023
(51) Int. Cl.: B25F 5/00, H01M 50/247, H01M 50/256, H01M 50/264, H02J 7/00, H01M 50/244

(54) **PORTABLE POWER UNIT**

(30) Priority: 27.07.2022 US 202263392615 P; 09.12.2022 US 202263386730 P
(71) Applicant: Milwaukee Electric Tool Corporation, Brookfield, WI 53005 (US)
(72) Inventor: MINKEBIGE, Carissa J., Lake Mills, 53551 (US); GLANZER, Evan M., Milwaukee, 53207 (US); MILLER, Joseph W., Waukesha, 53186 (US); VAIDYA, Rohit, Menomonee Falls, 53051 (US); THUER, Erich G., Menomonee Falls, 53051 (US); FLAHERTY, Katherine A., Brookfield, 53045 (US); MARTINEZ, Gabriel, Torreon, 27085 (US); CHAPMAN-ALDRIDGE, Soren Z., Kenosha, 53143 (US)
(74) Representative: Forresters IP LLP

(57) **Abstract**

A portable power unit comprises a battery pack interface configured to receive a battery pack and a power tool interface that is configured to electrically connect to an external power tool. The portable power unit further comprises a tool control circuit configured to generate a tool control signal. The tool control signal is operable to control power provided to the external power tool. The portable power unit further comprises a bypass circuit configured to provide power from the battery pack to the external power tool. The portable power unit further comprises a controller configured to determine whether the external power tool is operable to be controlled by the tool control circuit and to control the bypass circuit to provide passthrough power to the power tool interface when the external power tool is not operable to be controlled by the tool control circuit.

## Description

### CROSS REFERENCE TO RELATED APPLICATIONS

This application claims priority to U.S. Provisional Patent Application No. 63/386,730, filed on December 9, 2022 and U.S. Provisional Patent Application No. 63/392,615, filed on July 27, 2022, the entire contents of both of which are incorporated herein by reference.

### FIELD OF THE INVENTION

The present invention relates to power tools, and more particularly to battery-powered power tools.

### BACKGROUND OF THE INVENTION

Power tools may be powered by batteries. The batteries may be interchangeable between a plurality of different power tools.

### SUMMARY OF THE INVENTION

The present invention provides, in one aspect, a portable power unit that comprises a battery pack interface configured to receive a battery pack. The power unit also includes a power tool interface configured to electrically connect to an external power tool and a tool control circuit configured to generate a tool control signal. The tool control signal is operable to control power provided to the external power tool. A bypass circuit is configured to provide power from the battery pack to the external power tool. A controller is configured to determine whether the external power tool is operable to be controlled by the tool control circuit. The controller is also configured to control the bypass circuit to provide passthrough power to the power tool interface when the external power tool is not operable to be controlled by the tool control circuit.

The present invention provides, in another aspect, a portable power unit that comprises a controller housing that includes a battery pack interface configured to receive a battery pack. The power unit also includes a power tool interface that is configured to selectively couple to a plurality of power tools in an interchangeable manner. The power unit further includes a cable having a first end and a second end. The first end is coupled to the controller housing, and the second end is coupled to the power tool interface. The power tool interface is configured to transmit electrical current from the battery pack attached to the battery pack interface to a power tool to which the power tool interface is coupled.

The present invention provides, in another aspect, a system that comprises a portable power unit including a controller housing. The controller housing includes a battery pack interface configured to receive a battery pack. The portable power unit includes a power tool interface configured to selectively couple to a plurality of power tools in an interchangeable manner. The portable power unit includes a cable that has a first end and a second end, and the first end of the cable is coupled to the controller housing. The second end of the cable is coupled to the power tool interface. The power tool interface is configured to transmit electrical current from the first battery pack attached to the battery pack interface to a power tool to which the power tool interface is coupled. The system further comprises a submersible pump to which the power tool interface is electrically connectable for supplying electrical current from the battery pack to the submersible pump.

The present invention provides, in another aspect, a system that comprises a portable power unit including a controller housing. The controller housing includes a battery pack interface that is configured to receive a first battery pack. The portable power unit includes a cable with a first end and an opposite second end. The first end of the cable is coupled to the controller housing. The system further comprises a power tool and a second battery pack directly connectable to the power tool. The second battery pack includes a bypass port to which the second end of the cable is connectable when the second battery pack is directly connected to the power tool. The power tool is configured to receive electrical current from the first battery pack via the cable and the bypass port.

The present invention provides, in another aspect, an adapter for use with a power tool. The adapter comprises a first interface configured to couple to the power tool and a second interface configured to couple to a battery pack. The battery pack is incapable of being directly attached to the power tool. The adapter transmits power from the battery pack to the power tool.

The present invention provides, in another aspect, a system that comprises a percussion tool including a housing, an electric motor supported by the housing, and a percussion mechanism driven by the motor. The percussion mechanism includes a striker that is supported for reciprocation in the housing. The percussion tool also includes a first battery terminal supported on the housing. The first battery terminal is operable to receive a battery pack. The system further includes a portable power unit including a second battery terminal operable to receive a battery pack. The portable power unit also includes a cable having a first end coupled to the second battery terminal and a second end including a connector configured to engage the first battery terminal. The battery pack is alternatively coupled to the first and second battery terminals to provide power to the motor.

The present invention provides, in another aspect, a portable power unit comprising:
a battery pack interface configured to receive a battery pack;
a power tool interface configured to electrically connect to an external power tool;
a tool control circuit configured to generate a tool control signal, the tool control signal operable to control power provided to the external power tool;
a bypass circuit configured to provide power from the battery pack to the external power tool; and
a controller configured to:
   determine whether the external power tool is operable to be controlled by the tool control circuit, and
   control the bypass circuit to provide passthrough power to the power tool interface when the external power tool is not operable to be controlled by the tool control circuit.

To determine whether the external power tool is operable to be controlled by the tool control circuit, the controller may be configured to:
receive, via the power tool interface, a communication signal from the external power tool, the communication signal operable to provide an indication that the external power tool is operable to be controlled by the tool control circuitry, and
control, in response to receiving the communication signal from the external power tool, the bypass circuitry to provide the tool control signal to the external power tool.

The portable power unit may further comprise:
a controller housing including the battery pack interface; and
a cable having a first end and a second end, the first end coupled to the controller housing and the second end coupled to the power tool interface,
wherein the power tool interface is configured to transmit electrical current from the battery pack attached to the battery pack interface to the external power tool to which the power tool interface is coupled.

The portable power unit may further comprise:
a backplate to which the controller housing is releasably attachable; and
rigging supported by the backplate, wherein the rigging is configured to be worn by a user for supporting the backplate and controller housing on a body of the user.

The power tool interface may include a housing, a pair of opposed rails spaced from the housing, and a pair of opposed recesses defined between the housing and the respective rails.

The battery pack interface may include a pair of opposed rails to which the battery pack is slidably attachable.

The battery pack interface may include a latch positioned between the guide rails and engageable with the battery pack to secure the battery pack to the battery pack interface.

The battery pack interface may include an electrical interface extending from the controller housing with which the battery pack is electrically connectable.

The electrical interface may include a plurality of electrical contacts that are electrically connectable with corresponding electrical contacts on the battery pack.

The present invention provides, in another aspect, a portable power unit comprising:
a controller housing including a battery pack interface configured to receive a battery pack;
a power tool interface configured to selectively couple to a plurality of power tools in an interchangeable manner; and
a cable having a first end and a second end, the first end coupled to the controller housing and the second end coupled to the power tool interface,
wherein the power tool interface is configured to transmit electrical current from the battery pack attached to the battery pack interface to a power tool to which the power tool interface is coupled.

The power tool interface may include a housing, a pair of opposed rails spaced from the housing, and a pair of opposed recesses defined between the housing and the respective rails.

The battery pack interface may include a pair of opposed rails to which the battery pack is slidably attachable.

The battery pack interface may include a latch positioned between the guide rails and engageable with the battery pack to secure the battery pack to the battery pack interface.

The battery pack interface may include an electrical interface extending from the controller housing with which the battery pack is electrically connectable.

The electrical interface may include a plurality of electrical contacts that are electrically connectable with corresponding electrical contacts on the battery pack.

The portable power unit may further comprise:
a backplate to which the controller housing is releasably attachable; and
rigging supported by the backplate, wherein the rigging is configured to be worn by a user for supporting the backplate and controller housing on a body of the user.

The controller housing may include a first side on which the battery pack interface is located and an opposite, second side defining a guide slot, and wherein the backplate may include a pair of opposed flanges that are received within the guide slot when the controller housing is attached to the backplate.

The portable power unit may further comprise a latch disposed on the second side of the controller housing for selectively securing the controller housing to the backplate.

The latch may be biased toward a locking position, and wherein the portable power unit may further comprise an actuator configured to move the latch from the locking position toward a release position.

The latch and the actuator may be positioned on adjacent sides of the controller housing.

The battery pack may be a first battery pack, and wherein the power tool interface may be in the form of an adapter that selectively interfaces with a plurality of various power tools in the same manner as and in place of a second battery pack.

The first battery pack and the second battery pack may have the same outer dimensions.

The battery pack may be a first battery pack, wherein the power tool interface may be a plug, and wherein the plug electrically couples to a bypass port of a second battery pack.

The present invention provides, in another aspect, a system comprising:
a portable power unit including
   a controller housing including a battery pack interface configured to receive a battery pack,
   a power tool interface configured to selectively couple to a plurality of power tools in an interchangeable manner, and
   a cable having a first end and a second end, the first end coupled to the controller housing and the second end coupled to the power tool interface,
   wherein the power tool interface is configured to transmit electrical current from the battery pack attached to the battery pack interface to a power tool to which the power tool interface is coupled; and
a submersible pump to which the power tool interface is electrically connectable for supplying electrical current from the battery pack to the submersible pump.

The present invention provides, in another aspect, a system comprising:
a portable power unit including
   a controller housing including a battery pack interface configured to receive a first battery pack,
   a cable having a first end and an opposite second end, the first end being coupled to the controller housing;
a power tool; and
a second battery pack directly connectable to the power tool, the second battery pack including a bypass port to which the second end of the cable is connectable when the second battery pack is directly connected to the power tool,
wherein the power tool is configured to receive electrical current from the first battery pack via the cable and the bypass port.

The system may further comprise a dust extractor including a hose configured to connect to the power tool, wherein the hose is configured to extract dust created during operation of the power tool and transport the dust through the hose and away from the power tool.

The second battery pack may be interchangeably connectable to a plurality of power tools.

The present invention provides, in another aspect, an adapter for use with a power tool, the adapter comprising:
a first interface configured to couple to the power tool; and
a second interface configured to couple to a battery pack, wherein the battery pack is incapable of being directly attached to the power tool;
wherein the adapter transmits power from the battery pack to the power tool.

The adapter may include battery cells.

The adapter may include a bypass port.

The present invention provides, in another aspect, a system comprising:
a percussion tool including
   a housing,
   an electric motor supported by the housing,
   a percussion mechanism driven by the motor and including a striker supported for reciprocation in the housing, and
   a first battery terminal supported on the housing operable to receive a battery pack; and
a portable power unit including
   a second battery terminal operable to receive a battery pack,
   a cable including a first end coupled to the second battery terminal and a second end including a connector configured to engage the first battery terminal, wherein
the battery pack is alternatively coupled to the first and second battery terminals to provide power to the motor.

The portable power unit may include straps to allow a user to carry the portable power unit.

The connector may be coupled to a power port defined on the housing of the percussion tool.

When the battery pack is coupled to the second battery terminal, electrical current may be transferred from the second battery terminal through the cable and to the motor to power the motor.

The portable power unit may include an electrical contact that is at least partially coated with a silver-carbon coating.

Other features and aspects of the invention will become apparent by consideration of the following detailed description and accompanying drawings.

### BRIEF DESCRIPTION OF THE DRAWINGS

FIG. 1 schematically illustrates a portable power unit, according to some embodiments.
FIG. 2 illustrates a method for operating the portable power unit of FIG. 1, according to some embodiments.
FIG. 3 is a perspective view of a portable power unit including an adapter, according to some embodiments.
FIG. 3A is a rear perspective view of a portion of the power unit of FIG. 3, illustrating a controller housing and a backplate.
FIG. 3B is a perspective view of an electrical interface of the power unit of FIG. 3.
FIG. 4 is a front perspective view of the backplate and controller housing of FIG. 3A.
FIG. 5 is a front perspective view of the controller housing of FIG. 3A.
FIG. 6 rear elevation view of the backplate of FIG. 3A.
FIG. 7 is a bottom elevation view of the backplate and controller housing of FIG. 3A.
FIG. 8 is a perspective view of a battery pack for attachment to the controller housing of FIG. 3A, according to some embodiments.
FIG. 9 is a perspective view of the adapter of FIG. 3.
FIG. 10 is a perspective view of the adapter of FIG. 3 with a first housing removed.
FIG. 11 is a top elevation view of the adapter of FIG. 3.
FIG. 11A is a perspective view of the adapter of FIG. 3 with a second housing removed showing an electrical terminal.
FIG. 12 is a perspective view of a battery pack having a bypass port, according to some embodiments.
FIG. 13 is a perspective view of a non-battery adapter, according to some embodiments.
FIG. 14 is a schematic of a portable power unit including a dust extractor, according to some embodiments.
FIG. 15 is a perspective view of a portable power unit coupled to a submersible pump, according to some embodiments.
FIG. 16 is an upper perspective view of a portion of a portable power unit, according to some embodiments.
FIG. 17 is a lower perspective view of the portion of the portable power unit of FIG. 16.
FIG. 18 is a perspective view of the portion of the portable power unit of FIG. 16 attached to a body of a user.
FIG. 19 is a side elevation view of a percussion tool, according to some embodiments.
FIG. 20 is a perspective view of a percussion tool, according to some embodiments.
FIG. 21 is a side elevation view of a percussion tool, according to some embodiments.
FIG. 22 is a side elevation view of the percussion tool of FIG. 21 with a portion of a housing removed.
FIG. 23 is a perspective view of another embodiment of the adapter of FIG. 3.
FIG. 24 is a perspective view of the adapter of FIG. 23 with a first housing removed.
FIG. 25 is a top elevation view of the adapter of FIG. 23.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

### Tool Control and Bypass Circuitry:

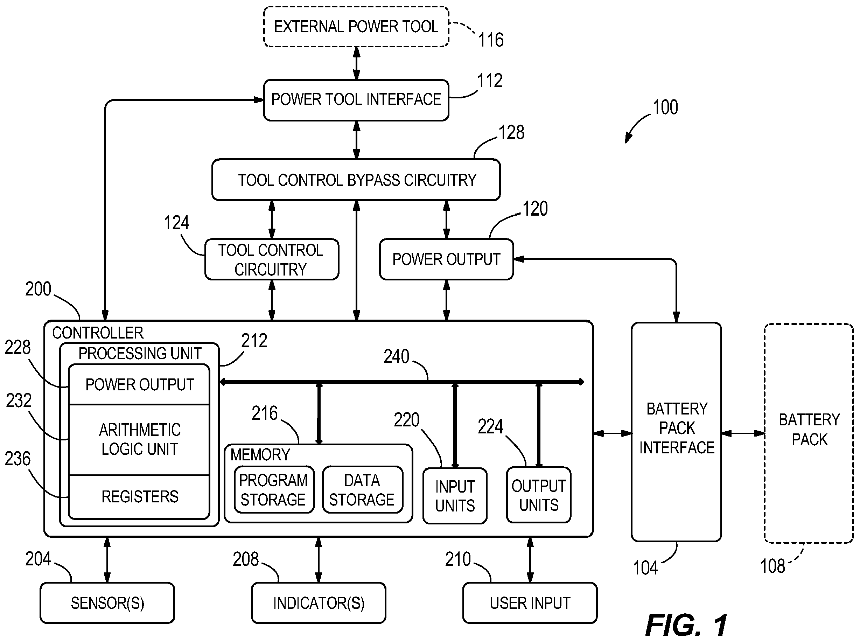

FIG. 1 schematically illustrates a portable power unit 100, according to some embodiments. The power unit 100 includes a battery pack interface 104 configured to receive a battery pack 108. In some embodiments, the battery pack interface 104 is configured to receive a plurality of battery packs 108. The battery pack 108 includes a housing defining an internal cavity in which one or more battery cells are supported. Each battery cell may have a nominal voltage between about 3 V and about 5 V and may have a nominal capacity between about 2 Ah and about 10 Ah (in some cases, between about 3 Ah and about 5 Ah). The battery cells may be any rechargeable battery cell chemistry type, such as, for example, lithium (Li), lithium-ion (Li-ion), other lithium-based chemistry, nickelcadmium (NiCd), nickel-metal hydride (NiMH), etc. In some embodiments, the battery pack 108 has a nominal voltage of between about 40V DC and 120V DC (e.g., 72V DC, 80V DC, 120V DC, etc.). In some embodiments, the battery cells are cylindrical battery cells having a diameter (e.g., 21mm) and a length (e.g., 70mm). In other embodiments, the battery cells are pouch battery cells. In some embodiments, the battery cells are operable to output a sustained operating discharge current of between about 40 Amperes and about 200 Amperes.

The battery cells may be connected in series, parallel, or combination series-parallel to provide the desired electrical characteristics (e.g., nominal voltage, current output, current capacity, power capacity, etc.) of the battery pack 108. The battery cells are coupled to battery contacts supported on or within the housing and configured to electrically and mechanically engage the battery pack interface 104 to facilitate the transfer of electrical power between the battery pack 108 and the external power tool 116. The battery pack 108 includes mechanical features configured to engage corresponding features on the battery pack interface 104 to couple and maintain engagement of the battery pack interface 104 and the battery pack 108.

The power unit 100 further includes a power tool interface 112 configured to connect to an external power tool 116, a power output module 120 for providing power from the battery pack 108 to the external power tool 116, and tool control circuitry 124. In some embodiments, the power tool interface 112 is an adapter or attachment configured to couple to a particular one of a plurality of different types of external power tools. In some embodiments, the external power tool 116 is operable to be controlled based on control signals generated by the tool control circuitry 124. For example, the tool control circuitry 124 may control an amount of power supplied to the external power tool 116 (e.g., by controlling an inverter within the tool control bypass circuitry 128 to regulate a power output from the power output module 120). In some embodiments, the tool control circuitry 124 is configured to control the power output based on a signal received from the external power tool 116 via the power tool interface 112. In other embodiments, the external power tool 116 may lack a communication module for receiving and transmitting communication signals with the tool control circuitry 124. Accordingly, the power unit 100 includes tool control bypass circuitry 128 electrically connected between the tool control circuitry 124 and the power tool interface 112. The bypass circuitry 128 selectively provides the tool control signals generated by the tool control circuitry 124 to the external power tool 116, via the power tool interface 112. When the external power tool 116 is not operable to be controlled by the tool control circuitry 124, the bypass circuitry 128 does not transmit tool control signals to the external power tool 116 and instead provides passthrough power from the battery pack 108 to the external power tool 116. In such embodiments, the external power tool 116 includes independent control circuitry for controlling operation (e.g., of a motor) and only receives power from the power tool interface 112. In some embodiments, the tool control circuitry 124 only controls circuitry within the power unit 100 and does not pass any control signals to the external power tool 116. As a result, the tool control circuitry 124 regulates a power output from the power tool interface 112 that is provided to the external power tool 116 without directly communicating with the external power tool 116.

With continued reference to FIG. 1, a generalized schematic of a controller 200 included in the power unit 100 is illustrated. The controller 200 is electrically and/or communicatively connected to a variety of modules or components of the power unit 100. For example, the illustrated controller 200 is electrically connected to the battery pack interface 104, the power output module 120, the tool control circuitry 124, the tool control bypass circuitry 128, one or more sensors or sensing circuits 204 (e.g., voltage sensors, current sensors, temperature sensors, etc.), one or more indicators 208, a user input 210 (e.g., for controlling the tool control bypass circuitry 128). In some embodiments, the user input 210 is configured to be controlled by a user to configure the tool control bypass circuitry 128 in either a bypass power mode (e.g., to only provide a power output) or a control mode (e.g., to provide control and or power to the external power tool 116). The controller 200 includes combinations of hardware and software that are operable to, among other things, control the operation of the power unit 100, monitor the operation of the power unit 100, activate the one or more indicators 140 (e.g., an LED), control the tool control circuitry 124, control the tool control bypass circuitry 128, etc.

The controller 200 includes a plurality of electrical and electronic components that provide power, operational control, and protection to the components and modules within the controller 200 and/or the power unit 100. For example, the controller 200 includes, among other things, a processing unit 212 (e.g., a microprocessor, a microcontroller, an electronic processor, an electronic controller, or another suitable programmable device), a memory 216, input units 220, and output units 224. The processing unit 212 includes, among other things, a control unit 228, an arithmetic logic unit ("ALU") 232, and a plurality of registers 236 (shown as a group of registers in FIG. 1), and is implemented using a known computer architecture (e.g., a modified Harvard architecture, a von Neumann architecture, etc.). The processing unit 212, the memory 216, the input units 220, and the output units 224, as well as the various modules or circuits connected to the controller 200 are connected by one or more control and/or data buses (e.g., common bus 240). The control and/or data buses are shown generally in FIG. 1 for illustrative purposes. The use of one or more control and/or data buses for the interconnection between and communication among the various modules, circuits, and components would be known to a person skilled in the art in view of the embodiments described herein.

The memory 216 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 212 is connected to the memory 216 and executes software instructions that are capable of being stored in a RAM of the memory 216 (e.g., during execution), a ROM of the memory 216 (e.g., on a generally permanent basis), or another non-transitory computer readable medium such as another memory or a disc. Software included in the implementation of the power unit 100 can be stored in the memory 216 of the controller 200. The software includes, for example, firmware, one or more applications, program data, filters, rules, one or more program modules, and other executable instructions. The controller 200 is configured to retrieve from the memory 216 and execute, among other things, instructions related to the control processes and methods described herein. In other constructions, the controller 200 includes additional, fewer, or different components.

The controller 200 controls the bypass circuitry 128, for example, by controlling one or more switches included in the bypass circuitry 128 in order to selectively provide a tool control signal generated by the tool control circuitry 124 and/or power from the power output module 120 to the external power tool 116. The controller 200 is configured to control the bypass circuitry 128 based on a determination of whether the external power tool 116 is operable to be controlled by the tool control circuitry 124 of the power unit 100 or includes independent control circuitry. In some embodiments, the controller 200 is configured to determine that the external power tool 116 is operable to be controlled by the tool control circuitry 124 in response to receiving, via the power tool interface 112, a communication signal from the external power tool 116. In some embodiments, the controller 200 is configured to determine that the external power tool 116 is operable to be controlled by the tool control circuitry 124 based on a determination that no communication signals are received from the external power tool 116. In such embodiments, a default operational mode of the power unit 100 can be for the tool control circuitry to control the external power tool 116. When the power unit 100 receives a signal or indication from the external power tool 116 that the external power tool 116 is capable of controlling its operation, the bypass circuitry 128 is configured to provide passthrough power without control by the tool control circuitry 124.

In some embodiments, the power tool interface 112 is configured to generate or receive a signal indicating that the external power tool 116 is attached to the power tool interface and/or indicative of a type of external power tool 116 to which the power unit 100 is coupled. For example, the signal may correspond to a voltage signal (e.g., a voltage drop across an identification resistor, etc.), a communication, a lack of a communication, etc. The controller 200 may determine, for example using a lookup table stored in memory 216, whether the signal corresponds to a tool that is operable to be controlled by the tool control circuitry 124 or to a tool that is not operable to be controlled by the tool control circuitry 124 (e.g., including independent control circuitry). In some embodiments, the power tool interface 112 is configured to determine when the external power tool 116 is connected to the power tool interface 112 (e.g., presence detection). If, for example, the controller 200 does not receive a signal within a predetermined time limit indicating that the external power tool 116 is capable of controlling its own operation, the power unit 100 will use the tool control circuitry 124 to control the external power tool.

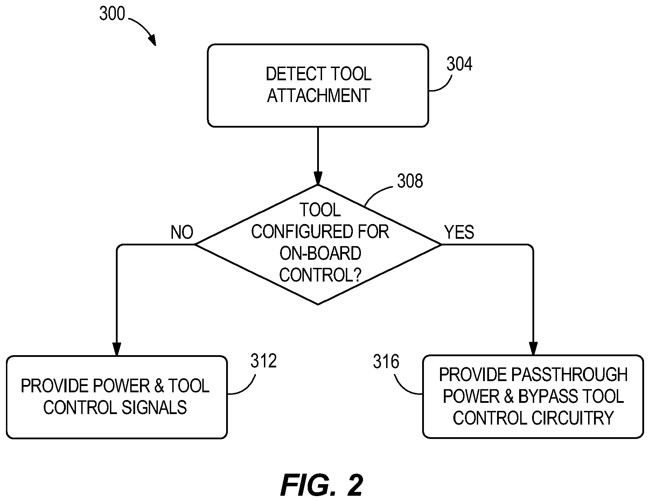

FIG. 2 illustrates a method 300 implemented by the controller 200 for controlling the power unit 100, according to some embodiments. The method 300 includes detecting whether an external power tool 116 is coupled to the power tool interface 112 of the power unit 100 (STEP 304). In response to detecting that the external power tool 116 is connected to the power tool interface 112, the controller 200 determines whether the external power tool 116 is operable to be controlled by the tool control circuitry 124 of the power unit 100 (STEP 308). If the controller 200 determines that the external power tool 116 is operable to be controlled by the tool control circuitry 124, the controller 200 controls the bypass circuitry 128 to provide power to the external power tool 116 and optionally transmit one or more control signals generated by the tool control circuitry 124 to the external power tool 116 (STEP 312). In some embodiments, the tool control circuitry 124 provides control signals to the external power tool 116. In other embodiments, the tool control circuitry only generates control signals within the power unit 100 and does not transmit control signals external to the power unit 100. In contrast, if the controller 200 determines at STEP 308 that the external power tool 116 is not operable to be controlled by the tool control circuitry 124, the controller 200 controls the bypass circuitry 128 to bypass the tool control circuitry 124 and instead provides passthrough power from the battery pack 108 to the external power tool 116 (STEP 316).

### Power Unit and Adapter System:

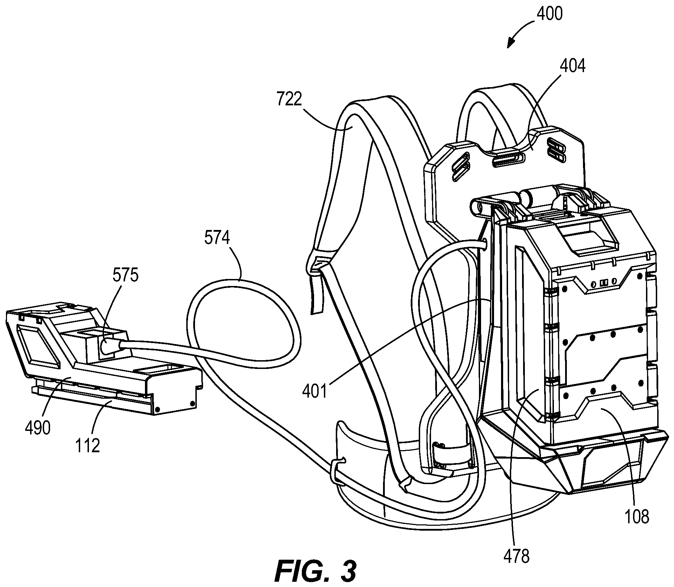

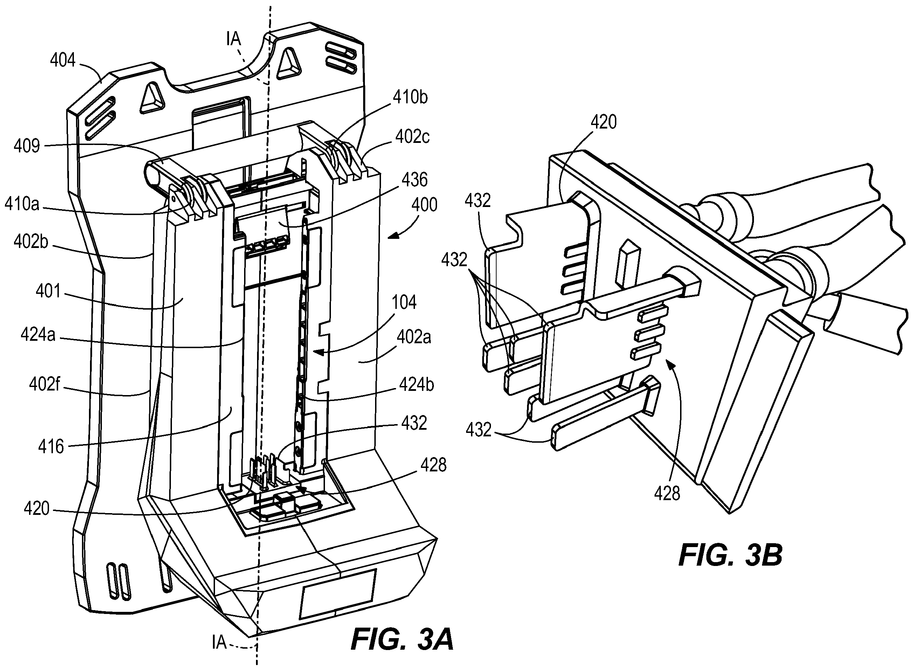

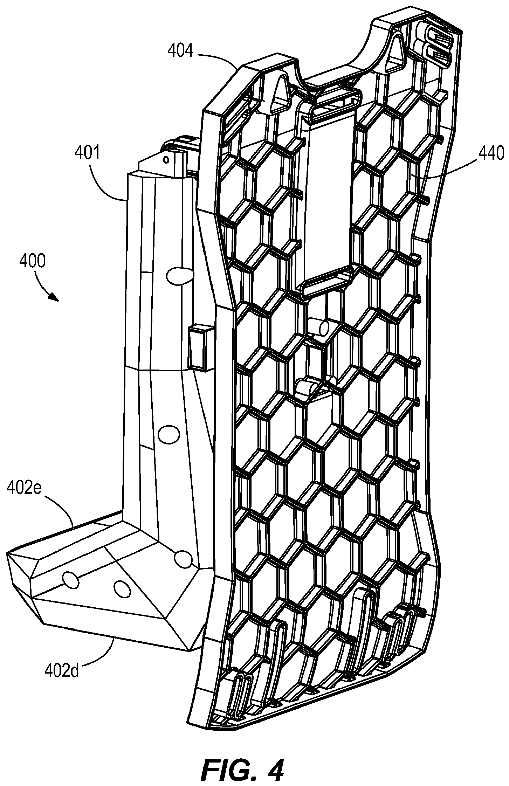

With reference to FIG. 3, an embodiment of a portable power unit 400 is shown. The power unit 400, in some embodiments, may include the tool control and bypass circuitry described above in connection with the portable power unit 100. With reference to FIGS. 3A and 4, the power unit 400 includes a controller housing 401 in which the controller 200 is located and on which the battery pack interface 104 is defined. The controller housing 401 includes a first (rear) side 402a, a second (front) side 402b, a third (top) side 402c, a fourth (bottom) side 402d, a fifth (left) side 402e, and a sixth (right) side 402f. The controller housing 401 may be attached to a backplate 404. In the illustrated embodiment, the second side 402b of the controller housing 401 faces the backplate 404 when the controller housing 401 and the backplate 404 are assembled together. A pivotable handle 409 is mounted to the third side 402c of the controller housing 401 at a pair of quadruple-shear pivot points 410a, 410b to facilitate hand-carrying the power unit 400. The backplate 404 generally defines a backpack plane and is attached to straps or other rigging 722 (FIG. 3) to allow a user to carry the power unit 400 on the user's back while the power unit 400 is in use or between uses of the power unit 400. The battery pack 108 includes an outer surface 478 that may be so dimensioned as to transition smoothly into an outer surface of the controller housing 401 when the battery pack 108 is coupled to the controller housing 401.

With continued reference to FIG. 3A, the battery pack interface 104 is disposed, in some embodiments, at least partly on the first side 402a of the controller housing 401. The battery pack interface 104 includes both a mechanical interface 416 to physically attach and secure the battery pack 108 (FIG. 1) to the controller housing 401 as well as an electrical interface 420 to electrically connect the attached battery pack 108 to the controller housing 401. The battery pack 108 attaches to the battery pack interface 104 by sliding along a battery pack insertion axis IA. The mechanical interface 416 may, in some embodiments, include a pair of opposing guide rails 424a, 424b along which the battery pack 108 is slidably attachable and a latch 436 positioned between the guide rails 424a, 424b engageable with the battery pack 108 to secure the battery pack 108 to the battery pack interface 104. The electrical interface 420 may, in some embodiments, extend from the controller housing 401 and include a terminal 428 having a plurality of electrical contacts 432 that are electrically connectable with corresponding electrical contacts on the battery pack 108.

With reference to FIG. 3B, the electrical contacts 432 may be partially or entirely coated with a silver-carbon coating. The electrical interface 420 may be configured to transmit less than, approximately equal to, or greater than 60 amperes of continuous current. More specifically, the silver-carbon coating may be applied to the positive and negative terminal blades of the electrical contacts 432. The silver-carbon coating may be a silver-carbon plating that has a lower impedance than certain other forms of electrical terminals and/or electrical terminal coatings such as, for example, nickel plating.

In some embodiments, a silver-carbon coating may include approximately 4.98% carbon by weight, approximately 0.07% silicon by weight, and approximately 94.95% silver by weight. A silver-carbon coating may include in some embodiments approximately between 0.01% and 10% carbon by weight, in some embodiments approximately between 1% and 9% carbon by weight, in some embodiments approximately between 2% and 8% carbon by weight, in some embodiments approximately between 3% and 7% carbon by weight, in some embodiments approximately between 4% and 6% carbon by weight, in some embodiments approximately between 4.50% and 5.50% carbon by weight, and in some embodiments approximately between 4.90% and 5.06% carbon by weight. A silver-carbon coating may include in some embodiments approximately between 0.00% and 1.00% silicon by weight, in some embodiments approximately between 0.01% and 0.20% silicon by weight, and in some embodiments approximately between 0.05% and 0.09% silicon by weight. A silver-carbon coating may include in some embodiments approximately between 80% and 99.99% silver by weight, in some embodiments approximately between 90% and 98% silver by weight, in some embodiments approximately between 92% and 96% silver by weight, in some embodiments approximately between 94.50% and 95.50% silver by weight, and in some embodiments approximately between 94.86% and 95.04% silver by weight. Various combinations of ingredients may be used to form a silver-carbon coating. For example, a silver-carbon coating may include approximately between 4.90% and 5.06% carbon by weight, approximately between 0.05% and 0.09% silicon by weight, and approximately between 94.86% silver and 95.04% silver by weight.

With reference to FIG. 4, the backplate 404 includes a front face 440. The front face 440 has a hexagonal honeycomb structure that faces a back of a user when the power unit 400 is worn by the user. The backplate 404 is selectively slidably attachable to the controller housing 401 via a latch-type engagement system, and when the backplate 404 is attached to the controller housing 401, the front face 440 faces away from the controller housing 401.

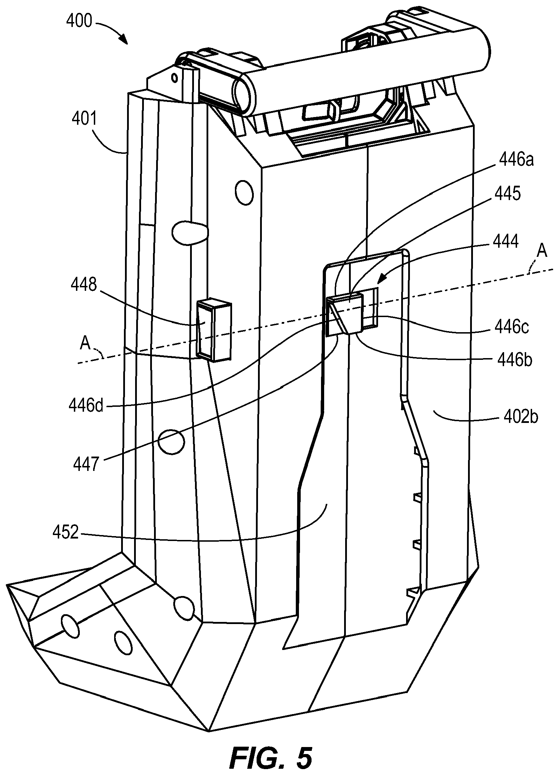

With reference to FIG. 5, the controller housing 401 includes a guide slot 452 on the second side 402b of the controller housing 401. A latch 444 is also disposed on the second side 402b of the controller housing 401 for selectively attaching the controller housing 401 to the backplate 404. The latch 444 is biased toward a locking position by a spring (not shown) and is movable toward an unlocking or release position by an actuator, such as a button 448. In the illustrated embodiment of FIG. 5, the latch 444 includes a latch portion 445 and a button portion 448 that are integrally formed as a single contiguous structure. The latch 444 and the button 448 are positioned on adjacent sides of the controller housing 401. The latch 444 includes a first side 446a, a second side 446b, a third side 446c, and a fourth side 446d. The latch 444 is disposed in a slot 447 such that pressing the button 448 inward slides the latch 444 in the slot 447 along a latch actuation direction A (in the illustrated embodiment, toward the right from the frame of reference of FIG. 5), which may be transverse to or generally perpendicular to the battery pack insertion axis IA (FIG. 3A). The latch 444 is biased in an opposite direction (i.e., toward the left from the frame of reference of FIG. 5) by a return spring or other biasing member (not shown).

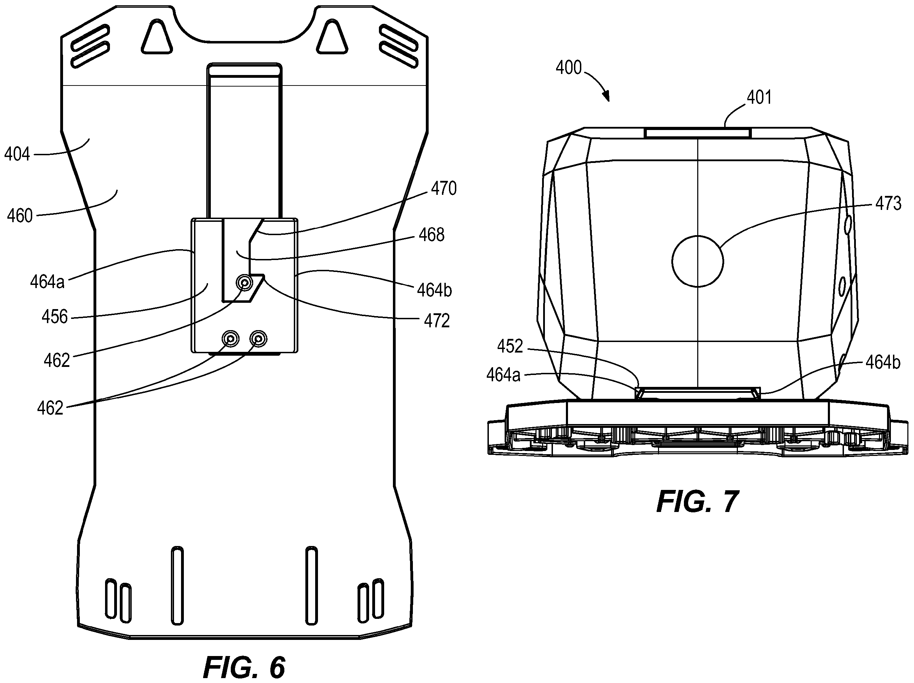

With reference to FIG. 6, the backplate 404 further includes a rear face 460. A backplate bracket 456 may be mounted to the rear face 460 by screws, bolts, or other fasteners 462, or the backplate bracket 456 may be integrally formed with the backplate 404. The backplate bracket 456 includes a pair of opposed flanges 464a, 464b that are received within the guide slot 452 when the controller housing 401 is attached to the backplate 404. A groove 468 is formed in the backplate bracket 456 in which the latch 444 is received when the controller housing 401 is attached to the backplate 404. The groove 468 includes a ramp surface 470 that engages the fourth side 446d of the latch portion 445 as well as a detent notch 472 that matches a shape of the first side 446a and the fourth side 446d of the latch portion 445.

In operation, and with reference to FIGS. 5 and 6, the button portion 448 may be pressed inward by a user to move the button portion 448 and the latch portion 445 in unison against the bias of the return spring, from a first (locking) position (shown in FIG. 5) to a second (release) position. The controller housing 401 and the backplate 404 may be held together by the latch 444 when in the locking position. Once attached, the controller housing 401 and the backplate 404 may be released by a user pressing the button portion 448 of the latch 444, causing the latch portion 445 to move from the locked position to the release position. And, to attach the controller housing 401 to the backplate 404, the user may slide the backplate bracket 456 into the guide slot 452 on the controller housing 401. This sliding action causes the ramp surface 470 to apply a normal force to the fourth side 446d of the latch portion 445, thereby moving the latch 444 into the release position and compressing the return spring. When the backplate bracket 456 is slid far enough into the guide slot 452 such that the latch portion 445 passes the ramp surface 470 and approaches the detent notch 472, the latch portion 445 is biased into the detent notch 472 by the return spring, and the latch 444 is thereby moved into the locking position. Engagement between the first side 446a of the latch portion 445 and the detent notch 472 inhibits removal of the controller housing 401 from the backplate 404 unless the user first depresses the button portion 448, thereby moving the latch 444 to the release position and disengaging the first side 446a of the latch portion 445 from the detent notch 472.

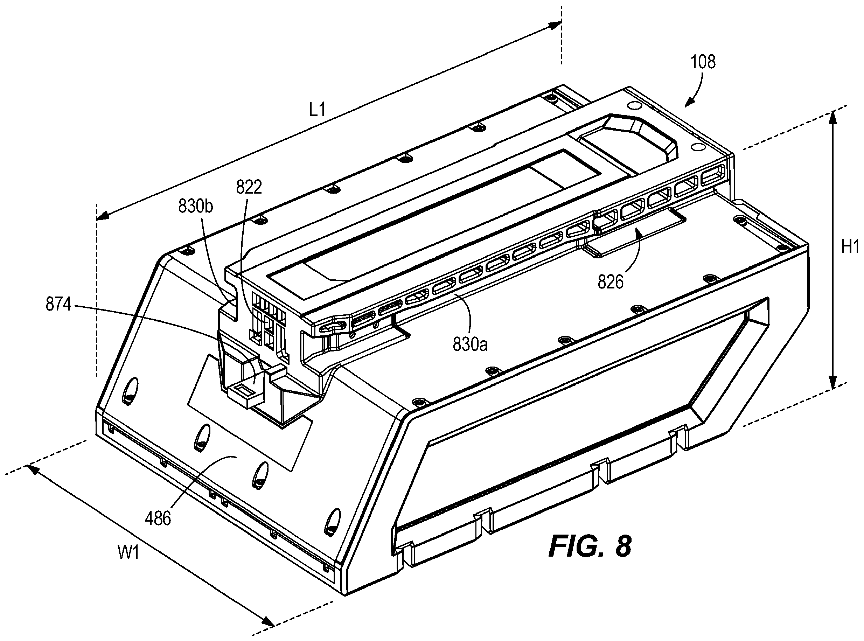

With reference to FIGS. 3A and 8, a portable power source, such as the battery pack 108, for storing electrical energy and delivering the electrical energy to the power unit 400 is attachable to the battery pack interface 104. The battery pack 108 may have a 20S2P configuration and may include two cell strings of twenty series-connected battery cells, the cell strings being connected in parallel. The battery pack may define a length L1 within a range of approximately 260 mm to approximately 280 mm. In some embodiments, the length L1 is approximately 270 mm. The battery pack 108 may define a width W1 within a range of approximately 171 mm to approximately 191 mm. In some embodiments, the width W1 is approximately 181 mm. The battery pack 108 may define a height H1 within a range of approximately 96 mm to approximately 116 mm. In some embodiments, the height H1 is approximately 106 mm. A total weight of the battery pack 108 may be within a range of approximately 10.25 lbs. to 11.25 lbs. In some embodiments, the total weight of the battery pack 108 may be approximately 10.75 lbs. The battery pack 108 may have an AC internal resistance ("ACIR") within a range of approximately 75 mQ to approximately 80 mQ. The battery pack 108 may have a DC internal resistance within a range of approximately 130 mQ to approximately 170 mQ. The length dimension may be defined in a direction along the battery pack insertion axis IA when the battery pack 108 is mounted to the power unit 400. If the battery pack insertion axis IA is understood to be parallel to a plane of general symmetry of the battery pack 108, the width dimension may be defined to be transverse or perpendicular to the plane of general symmetry, and the height dimension may be defined to be parallel to the plane of general symmetry.

With continued reference to FIG. 8, the battery pack 108 includes a battery terminal block 822 that is operable to electrically connect the battery pack 108 to the power unit 400. The battery terminal block 822 may include a positive battery terminal, a ground terminal, a charger terminal, a low-power terminal, a positive transmission terminal, a negative transmission terminal, a positive receiver terminal, and a negative receiver terminal. The positive battery terminal and the ground terminal may be connectable to power terminals of the power unit 400 and provide a main discharging current for the operation of the power tool. The charger terminal and the ground terminal may be connectable to charging terminals of a charger and receive charging current to charge the battery cells of the battery pack 108. In some embodiments, the battery pack terminals may be made of F-Tec material (a copper, phosphorus material) to offer better thermal distribution capabilities and durability. The battery pack terminals may include a silver-carbon coating as disclosed herein.

With continued reference to FIG. 8, a switch 874 extends from a housing 486 of the battery pack 108. The switch 874 is configured to be in a first position and a second position. When in the first (e.g., "OFF") position, electrical components (for example, sub-cores) of the battery pack 108 contained within the housing 486 are electrically disconnected from each other. When in the second (e.g., "ON") position, electrical components (for example, sub-cores) are electrically connected to each other. The switch 874 may be manipulated by a user from the first position to a second position by pressing or sliding the switch 874.

With continued reference to FIG. 8, the battery pack 108 includes a support portion 826 that provides a slide-on arrangement between opposed recesses 830a, 830b in which the complementary guide rails 424a, 424b on the controller housing 401 are received. In some embodiments, a power source is integrated into the power unit 400, and particularly into the controller housing 401, in the form of non-removable battery cells. Further, in other embodiments, more than one battery pack is attached to the power unit 400. In such an embodiment, the batteries may discharge in parallel, in series, or sequentially. Further, in some embodiments, the power unit 400 includes electronics to transform battery voltage from a first voltage level to a second voltage level. For example, electronics may transform a nominal battery voltage from 18 volts to 80 volts or vice versa. A person having ordinary skill in the art would understand other voltages to which a battery voltage could be transformed to operate a power tool. In some embodiments, the power unit 400 may include battery control electronics to monitor one or more characteristics of the battery cells, including battery capacity, charge level, battery leaks, and/or temperature, etc.

In operation, and with reference to FIGS. 3, 3A, 5, and 8, the battery pack 108 slides into the battery pack interface 104 along the battery pack insertion axis IA (FIG. 3A), thereby engaging the recesses 830a, 830b with the opposing guide rails 424a, 424b (FIG. 3A), to selectively mechanically and electrically connect the battery pack 108 to the controller housing 401. The straps and/or rigging 722 (FIG. 3) that are attached to the backplate 404 are attached to the user's back such that the power unit 400 can be carried by the user.

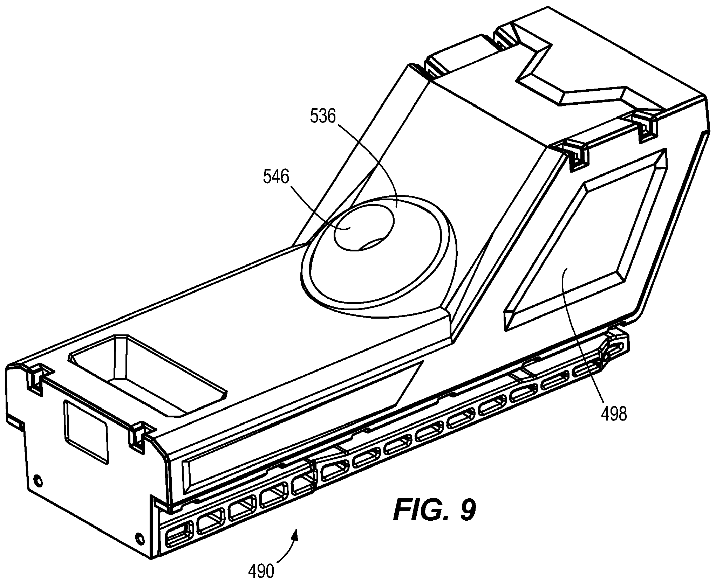

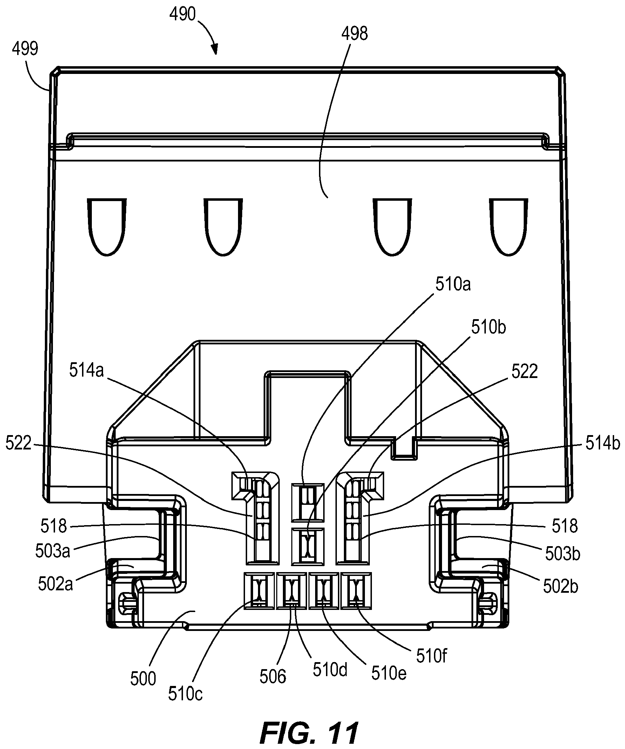

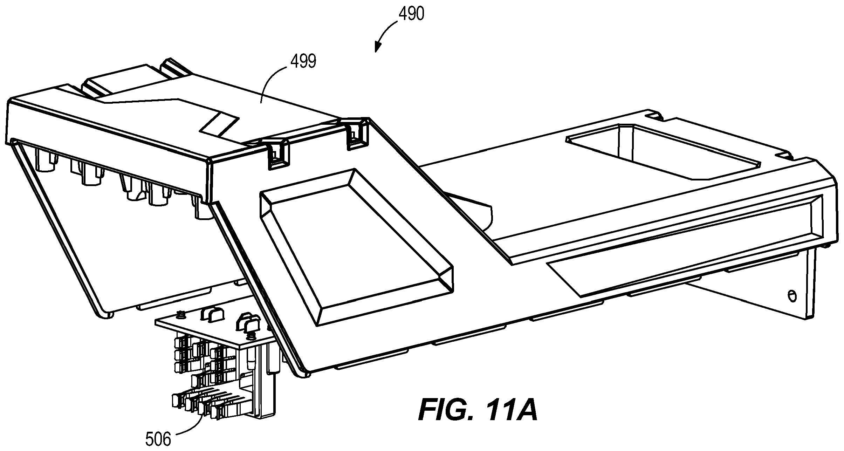

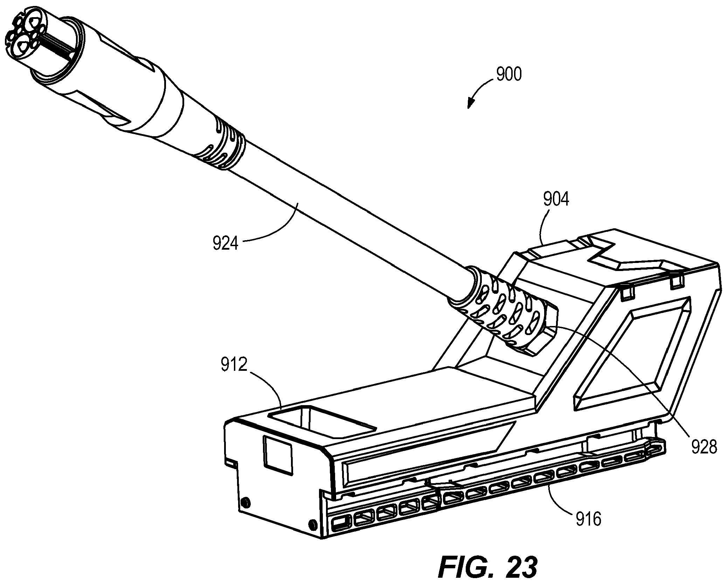

With reference to FIGS. 9-11, the power unit 400 includes a power tool interface 112 (FIGS. 1 and 3) which may be in the form of an adapter 490 (FIGS. 3 and 9-11), an adapter 900 (FIGS. 23-25), or another adapter or connection for connecting the power unit 400 to a power tool. The adapter 490 selectively interfaces with a plurality of various power tools in the same manner as and in place of the battery pack 108 or another battery pack that is configured differently from the battery pack 108. In other words, the adapter 490 may alternately attach to a first power tool and to a second power tool, which may or may not be the same type of tool, in place of the battery pack 108 or another battery pack. The adapter 490 includes an adapter housing 498 that includes a pair of opposing rails 502a, 502b that form a pair of opposed recesses 503a, 503b (FIG. 11) that are similar to the recesses 830a, 830b of the battery pack 108 or another battery pack. The opposed recesses 503a, 503b may be defined between the adapter housing 498 and the respective rails 502a, 502b. The rails 502a, 502b act as a mechanical interface to engage mating grooves defined in battery pack interfaces of the plurality of various power tools. The adapter housing 498 includes a first housing 499 and a second housing 500. The adapter 490 further includes an electrical terminal 506 comprising eight openings in the adapter housing 498. More specifically, the adapter 490 may include six small openings 510a-510f and two L-shaped openings 514a, 514b. Each one of the L-shaped openings 514 includes a long side 518 and a short side 522. The short sides 522 of the L-shaped openings 514a, 514b are pointed in opposite directions, and two small openings 510 are positioned between the two L-shaped openings 514. The openings 510a-510f, 514a, 514b included in the electrical terminal 506 may be used as one or more of the following: a positive battery terminal, a ground terminal, a charger terminal, a low-power terminal, a positive transmission terminal, a negative transmission terminal, a positive receiver terminal, a negative receiver terminal, or another type of terminal. More particularly, the L-shaped opening 514b may be used as a positive battery terminal, the L-shaped opening 514a may be used as a ground terminal, the small opening 510a may be used as a charger terminal, the small opening 510b may be used as a low-power terminal, the small opening 510f may be used as a positive transmission terminal, the small opening 510e may be used as a negative transmission terminal, the small opening 510c may be used as a positive receiver terminal, and the small opening S10d may be used as a negative receiver terminal. Other terminal configurations are possible.

With reference to FIG. 11A, the electrical terminal 506 includes a plurality of electrical contacts that may be partially or entirely coated with a silver-carbon coating. The electrical terminal 506 may be configured to transmit less than, approximately equal to, or greater than 60 amperes of continuous current. Other electrical terminals may be provided with a silver-carbon coating (for example, electrical terminals on battery packs, etc.).

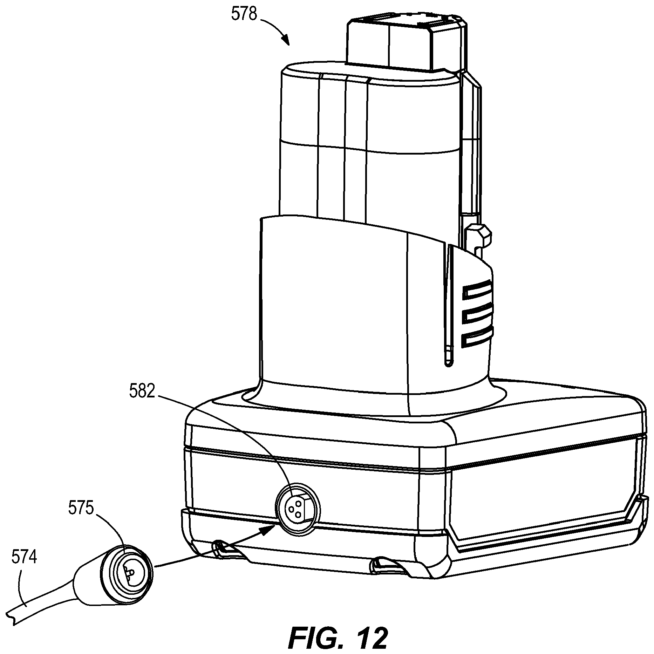

With reference to FIG. 9, the adapter 490 includes a dome 536 having a bore 546 passing therethrough and providing communication between a central volume of the adapter housing 498 and a surrounding environment of the adapter 490. An electrical cable 574 (FIG. 3) extends through the bore 546. The dome 536 may swivel to provide strain relief to the cable 574. The cable 574 is a component of the power unit 400 and may connect the controller housing 401, and therefore the battery pack 108, to the adapter 490. A hole 473 may be provided at a bottom of the controller housing 401 and may be an outlet port for the cable 574 (FIG. 7). The cable 574 is configured as a multi-conductor cable including electrical wires and insulation. The wires inside the cable 574 transmit electrical energy from the battery pack 108 to the adapter 490, and therefore to a power tool to which the adapter 490 is attached. The cable 574 may, in some embodiments, transmit control signals. The cable 574 may have at least one plug end 575 (FIGS. 3 and 12) that plugs into the adapter 490 or into another component, or the cable 574 may be permanently connected to the adapter 490.

In operation, and with reference to FIG. 3, the cable 574 is attached to the adapter 490. The adapter 490 is selectively attached to a power tool to power the power tool with the portable battery pack 108. A plurality of power tools may be selectively connectable to the adapter 490. As a result, the power unit 400 can power whichever of the power tools with which it is electrically connected via the cable 574. The use of the power unit 400 may have a benefit of reducing the weight carried by the user when hand-carrying and operating a power tool.

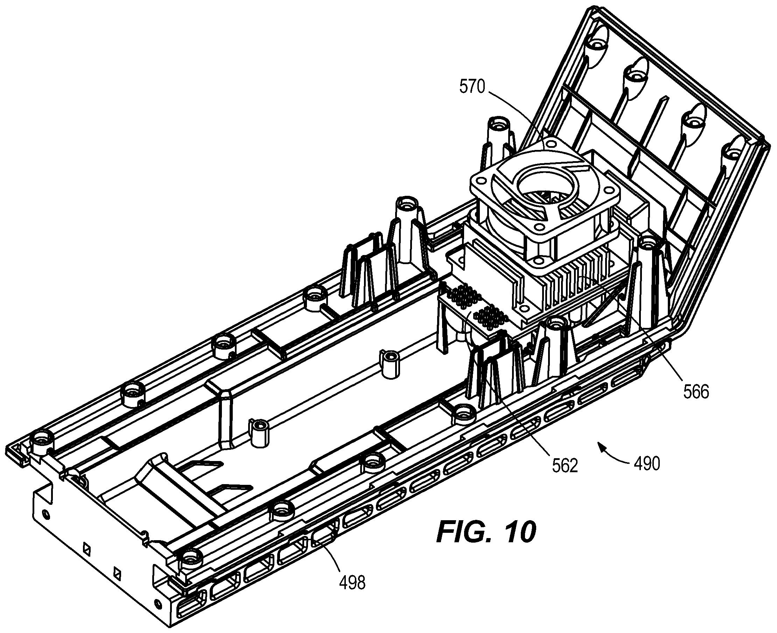

With reference to FIG. 10, the adapter 490 includes a printed circuit board ("PCB") 562 positioned within the adapter housing 498 and in electrical communication with the controller 200 via the cable 574. When the adapter 490 is attached to one of the plurality of power tools, the PCB 562 may be in electrical communication with that power tool as well. A heat sink 566 is positioned adjacent the PCB 562, and a cooling fan 570 is positioned above the heat sink 566 to provide forced convection cooling by circulating air through an interior of the adapter housing 498. In some embodiments, a thermal gap pad (not shown) may be positioned between the PCB 562 and the heat sink 566. The fan 570 includes an onboard electric motor, which receives electrical current from the battery pack 108 to dissipate heat from the PCB 562 and other components of the adapter 490 during operation of the power unit 400 and the attached power tool. In operation, the PCB 562 may control an operation of the fan 570.

In another embodiment, and with reference to FIGS. 3, 8, and 12, a power tool battery pack 578 includes a bypass port 582. The bypass port 582 receives the plug end 575 of the cable 574. In this embodiment, the cable 574 provides electrical current from the battery pack 108 to the power tool battery pack 578, thereby providing one or more benefits to a power tool to which the power tool battery pack 578 is attached, potentially including a longer battery life, increased voltage, increased current, and/or increased battery capacity.

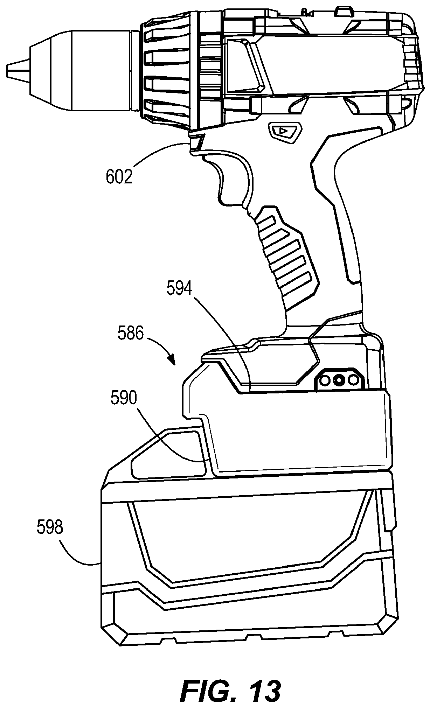

In another embodiment, and with reference to FIG. 13, an adapter 586, which may be referred to as a "non-battery adapter," may be equipped with a first interface 590 and a second interface 594. The adapter 586 may not include a charging system or battery cells. The first interface 590 mechanically and electrically connects a power tool battery pack 598 directly to the adapter 586, and the second interface 594 mechanically and electrically connects a power tool 602 to the adapter 586. Such an adapter 586 may be used for coupling the power tool battery pack 598 to the power tool 602 in situations in which the power tool 602 is not otherwise able to receive the power tool battery pack 598. For example, the adapter 586 may connect a power tool battery pack of a first brand to a power tool of a second brand. The adapter may include a bypass port (not shown) that functions as the bypass port 582 described herein.

### Dust Extractor:

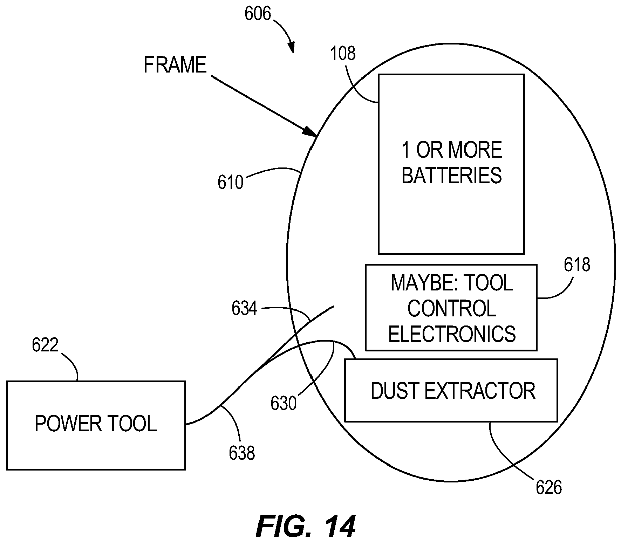

With reference to the schematic shown in FIG. 14, an embodiment of a portable power unit 606 includes a frame or controller housing 610 to which one or more energy sources such as the battery pack 108 may be attached. The controller housing 610 may be coupled to a backplate and rigging as described herein. In some embodiments, tool control electronics 618 may be provided within or attached to the controller housing 610 of the portable power unit 606 to control one or more characteristics of the operation of a power tool 622, such as, for example, a speed or frequency of the power tool 622. A dust extractor 626 may also be permanently or removably mounted to the controller housing 610. The dust extractor 626 may be powered by the one or more battery packs 108. In other embodiments, the dust extractor 626 is powered by a different battery (not shown) that may be internal to the dust extractor 626. The dust extractor 626 may include internal control electronics (not shown) to sense whether the power tool 622 is in operation and to consider whether the power tool 622 is in operation when determining whether to operate the dust extractor 626. In other embodiments, the tool control electronics 618 sense whether the power tool 622 is in operation and consider whether the power tool 622 is in operation when determining whether to operate the dust extractor 626. The dust extractor 626 is selectively connectable to the power tool 622. In some embodiments, the dust extractor 626 is permanently connectable to the power tool 622, and in other embodiments, the dust extractor 626 is removably connectable to the power tool 622. The connection between the dust extractor 626 and the power tool 622 is at least partly through a hose 630. The hose 630 may be bound to a cable 634 that connects the one or more battery packs 108 to the power tool 622 such that hose 630 and the cable 634 form, for at least a portion of the path between the portable power unit 606 and the power tool 622, a connection bundle 638 that includes at least one hose 630 and at least one cable 634, such that a direction of the hose 630 and the cable 634 are tangential at one or more points along the bundle 638. In other embodiments, the cable 634 and the hose 630 may be routed independently between the power tool 622 and the portable power unit 606. The dust extractor 626 may be used with power tools 622 that specifically include, for example, rotary hammers, demolition hammers, sanders, grinders, etc. In operation of the dust extractor 626, a vacuum source within the dust extractor 626 generates a vacuum within the hose 630 to transfer dust and debris from the power tool 622 and an area adjacent the power tool 622 to a filter, dust box, or other containment unit within the dust extractor 626.

### Submersible Pump:

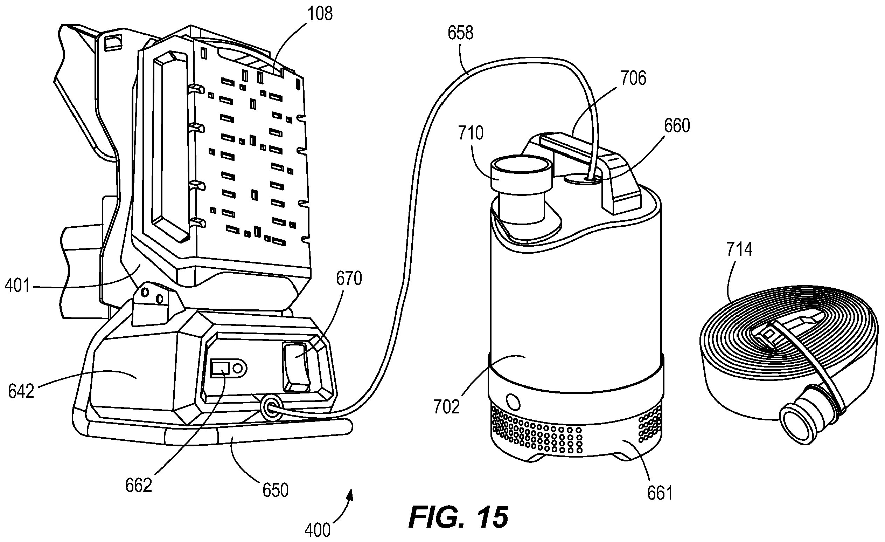

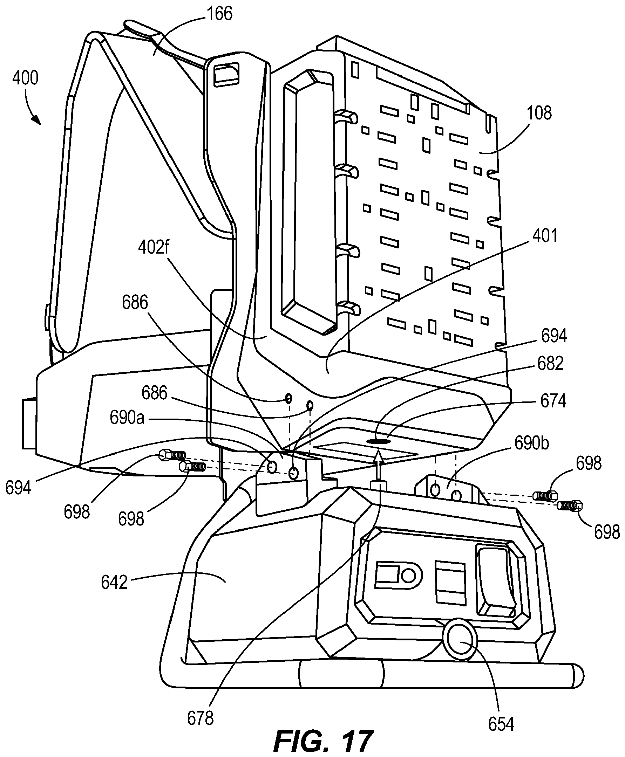

In another embodiment, and with reference to FIGS. 15-18, a variation of the power unit 400 includes a motor control unit 642 that is selectively attachable to a variation of the controller housing 401 described herein and able to be powered by a battery pack 108 as described herein. Electronic components of the controller 200 may be split between the controller housing 401 and the motor control unit 642. The motor control unit 642 includes a first (rear) side 646a that faces the backplate 404 when the motor control unit 642 is attached to the controller housing 401 and a second (front) side 646b opposite the first side 646a. The motor control unit 642 further includes a third (top) side 646c extending generally perpendicularly to the backpack plane and between the rear side 646a and the front side 646b. The top side 646c is facing the controller housing 401 when the motor control unit 642 is attached thereto. In the illustrated embodiment, the motor control unit 642 is surrounded and protected by a motor control unit guard 650 such that the front side 646b is recessed into the guard 650. In other embodiments, the motor control unit 642 may not be recessed into the guard 650. Further, in the illustrated embodiment, the motor control unit guard 650 is tubular and defines a U-shape when viewed from a direction that is transverse to the controller housing 401. In other embodiments, the motor control unit guard 650 may have a variety of different shapes and/or constructions.

With continued reference to FIGS. 15-18, the motor control unit 642 includes a first electrical connection 654 that in some embodiments permanently, and in other embodiments selectively, attaches a first end of a cable 658 to the motor control unit 642. A second electrical connection 660 permanently or selectively attaches a second end of the cable 658 to a tool such as a submersible pump 661. The motor control unit 642 also includes a control panel 662 and an on/off switch 670. The control panel 662 may include an arming button and a remote pairing button. The motor control unit 642 may also include a docking port to selectively receive a remote. In other embodiments, the remote may be selectively docked at other locations on the power unit 400. Further, the motor control unit 642 and the controller housing 401 may include a third electrical connection that in some embodiments permanently, and in other embodiments selectively, electrically connects the motor control unit 642 to the controller housing 401.

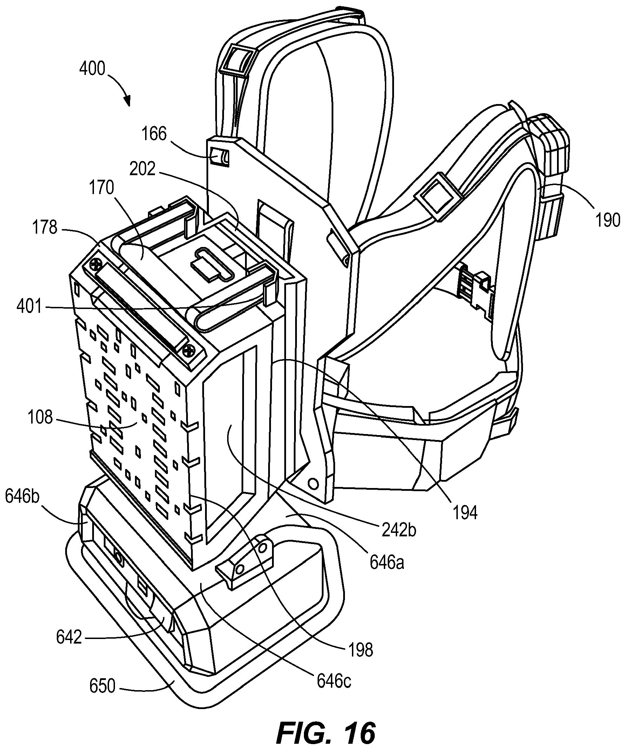

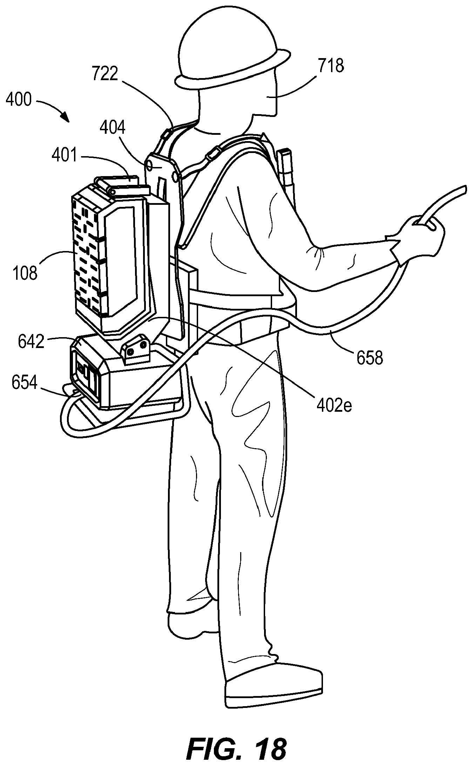

With continued reference to FIG. 16, a front side 202 of the controller housing 401 may connect to the backplate 404 (FIG. 18) with, for example, the latch 444 described herein or with another connection system. The controller housing 401 includes a handle 178 on a top side 170 of the controller housing 401 that, in some embodiments, is similar to the handle 409 described herein. The battery pack 108 may include an outer surface 198 (which may be similar to the outer surface 478 described herein) that includes opposite side surfaces 242a (not shown), 242b that transition, and in some embodiments transition smoothly, into the controller housing 401 at a battery pack interface 194 that may, in some embodiments, be similar to the battery pack interface 104.

With continued reference to FIGS. 16-18, the motor control unit 642 includes a sub-flush electronics connection 674 as the third electrical connection. The sub-flush electronics connection 674 is an interface between a male protrusion 678 in the form of a rigid connector on the motor control unit 642 and a female recess 682 within the controller housing 401. The sub-flush electronics connection 674 selectively electrically connects the motor control unit 642 to the controller housing 401 by plugging the male protrusion 678 into the female recess 682 on the controller housing 401. The sub-flush electronics connection 674 protects the electrical connection between the motor control unit 642 and the controller housing 401.

With continued reference to FIGS. 16-18, the controller housing 401 includes a plurality of first bores, each first bore housing a threaded insert 686. In the illustrated embodiment, two threaded inserts 686 are each housed within a respective first bore on a fifth side 402e of the controller housing 401, and two threaded inserts 686 are each housed within a respective first bore on a sixth side 402f of the controller housing 401. The motor control unit 642 includes two protruding ears 690a, 690b. Each of the two protruding ears 690a, 690b extends upward from the motor control unit 642 in a direction toward the controller housing 401. Each of the two protruding ears 690a, 690b includes a plurality of second bores 694. Each second bore 694 receives a bolt 698. Each one of the second bores 694 aligns with a respective one of the threaded inserts 686 when the motor control unit 642 is electrically connected to the controller housing 401. In other words, when the male protrusion 678 is fully received within the female recess 682, each second bore 694 is aligned with a threaded insert 686 such that a bolt 698 may be passed into each of the second bores 694 and threaded into one of the threaded inserts 686. When installed, the bolts 698 attach and hold the motor control unit 642 to the controller housing 401.

With returning reference to FIG. 15, the submersible pump 661 includes a cylindrical housing 702, a carrying handle 706, and an inlet and/or outlet port 710 to which a hose 714 may be attached.

In operation, and with reference to FIGS. 15 and 18, a user or operator 718 may use rigging 722 such that the power unit 400 is ergonomically supported by the operator while the power unit 400 is used to power and control the submersible pump 661 or another tool such as a dust extractor or a high cycle concrete vibrator. The rigging 722 may include a first (right) shoulder strap 190 and a second (left) shoulder strap 166 that couple to the backplate 404 (FIG. 16).

### Demolition Hammer:

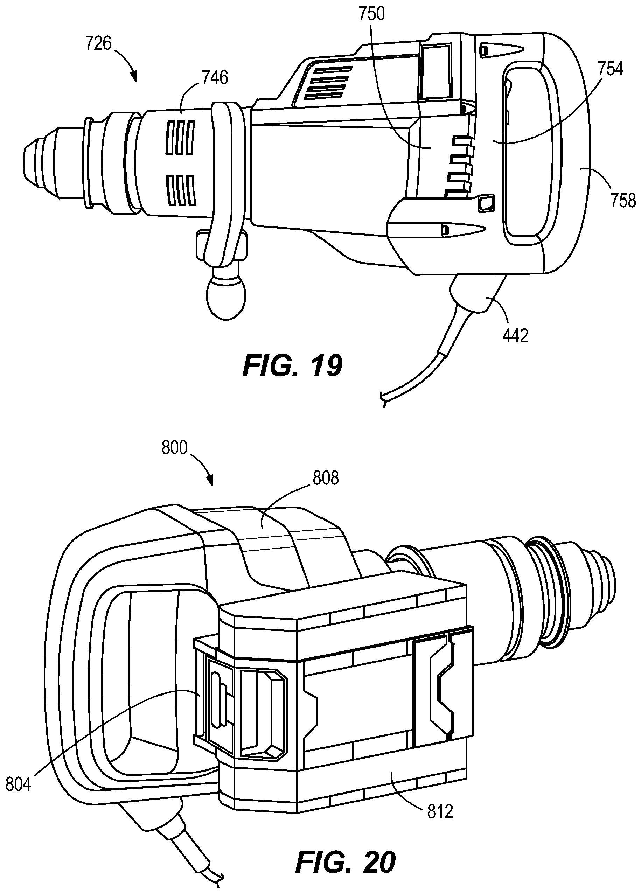

In another embodiment, and with reference to FIGS. 8 and 18-22, a power unit 400 powers and operates a percussion tool such as a demolition hammer, and in particular a percussion tool 726, 800. The power unit 400 may function as described herein and may be attached to straps or other rigging 722 to allow a user to carry the power unit 400 while in use. The power unit 400 may or may not include an attached motor control unit 642 while the percussion tool 726, 800 is in operation. A cable 574, 658 includes a first end connected to the controller housing 401 or to the motor control unit 642 and a second end opposite the first end. The second end of the cable 574, 658 includes the power tool interface 112, which may be an adapter 490 or connector 490, the adapter 900 (FIGS. 23-25), or another type of connector such as a plug. The connector 490, 900 attaches to a power port 442, 804 (see FIGS. 19 and 20) or another terminal of the percussion tool 726, 800 such that the percussion tool 726, 800 is connectable to the power unit 400 via the cable 574, 658.

With reference to FIGS. 8, 18, and 19, the port 442 may be positioned on a barrel 746, a gear/motor housing portion 750 of a housing 754, or a handle portion 758 of the housing 754. The cable 574, 658 provides power from the battery pack 108 to a motor of the percussion tool 726. In addition, a motor control unit 642 of the power unit 400 may communicate with a controller of the percussion tool 726 via the cable 574, 658 to control operation of the motor of the percussion tool 726 and other components of the percussion tool 726. The power unit 400 may be used simultaneously with or in lieu of a battery pack that is attached directly to the percussion tool 726. As such, using the power unit 400 instead of a battery pack that is attached directly to the percussion tool 726 removes the weight of the battery pack from the percussion tool 726, thereby allowing the percussion tool 726 to remain lightweight and easily handled by a user.

With reference to FIG. 20, the percussion tool 800 is similar to the percussion tool 726. However, a difference between the percussion tool 800 and the percussion tool 726 is that, on the percussion tool 800, the port 804 is positioned on a side of a housing 808. The port 804 may also be positioned in another location. The port 804 may receive the connector 490, 900, or the port 804 may directly receive a portable battery 812.

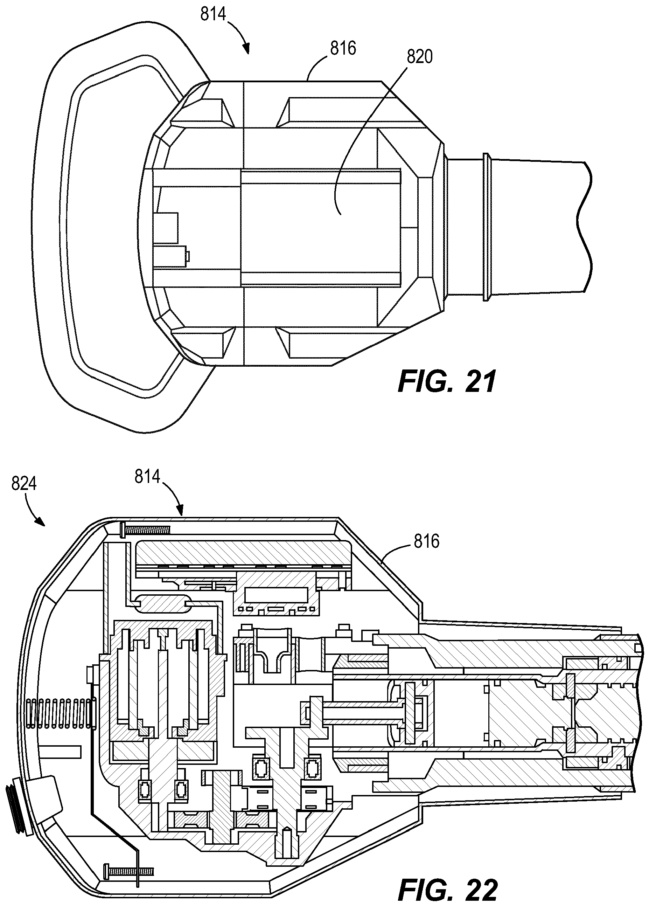

With reference to FIGS. 21-22, an embodiment of a percussion tool 814 includes a housing 816 having a mounting bracket 820 for receiving the connector 490, 900. Electrical connections 824 are disposed inside the housing 816 and engage with the connector 490, 900 to provide electrical communication between the percussion tool 814 and the power unit 400.

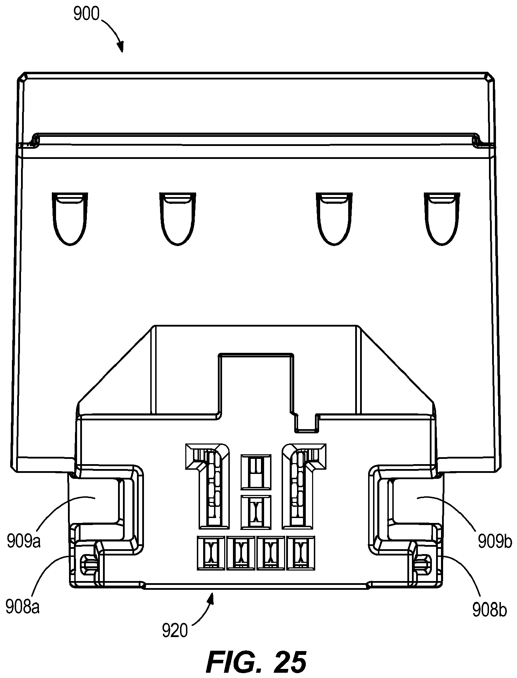

With reference to FIG. 23, an adapter 900 may be a power tool interface that functions similarly to the power tool interface 112 (FIGS. 1 and 3) and that functions similarly to the adapter 490 (FIGS. 3 and 9-11) for connecting the power unit 400 to a power tool. The adapter 900 selectively interfaces with a plurality of various power tools in the same manner as and in place of the battery pack 108 or another battery pack that is configured differently from the battery pack 108. In other words, the adapter 900 may alternatively attach to a first power tool and to a second power tool, which may or may not be the same type of tool, in place of the battery pack 108 or another battery pack. The adapter 900 includes an adapter housing 904 that includes a pair of opposing rails 908a, 908b (FIG. 25) that form a pair of opposed recesses 909a, 909b that are similar to the recesses 830a, 830b of the battery pack 108 or another battery pack. The rails 908a, 908b act as a mechanical interface to engage mating grooves defined in battery pack interfaces of the plurality of various power tools. The adapter housing 904 includes a first housing 912 and a second housing 916. The adapter 900 further includes an electrical terminal 920 that may be similar to the electrical terminal 506 of the adapter 490.

With continued reference to FIG. 23, the adapter 900 is couplable to an electrical cable 924 at an electrical connection 928. In some embodiments, the adapter 900 may be permanently connected to the electrical cable 924, and in other embodiments, the adapter 900 may be removably coupled to the electrical cable 924. The electrical cable 924 may be the same as or function analogously to, for example, the electrical cable 574. The electrical cable 924 may electrically connect the adapter 900 to the controller housing 401 and therefore to a battery pack such as, for example, the battery pack 108 (FIG. 3).

In operation, and with reference to FIGS. 3 and 23, the cable 924 is attached to the adapter 900. The adapter 900 is selectively attached to a power tool to power the power tool with the portable battery pack 108. A plurality of power tools may be selectively connectable to the adapter 490. As a result, the power unit 400 can power whichever of the power tools to which the power unit 400 is electrically connected via the cable 924 and via the adapter 900. The use of the power unit 400 may have a benefit of reducing the weight carried by the user when hand-carrying and operating a power tool.

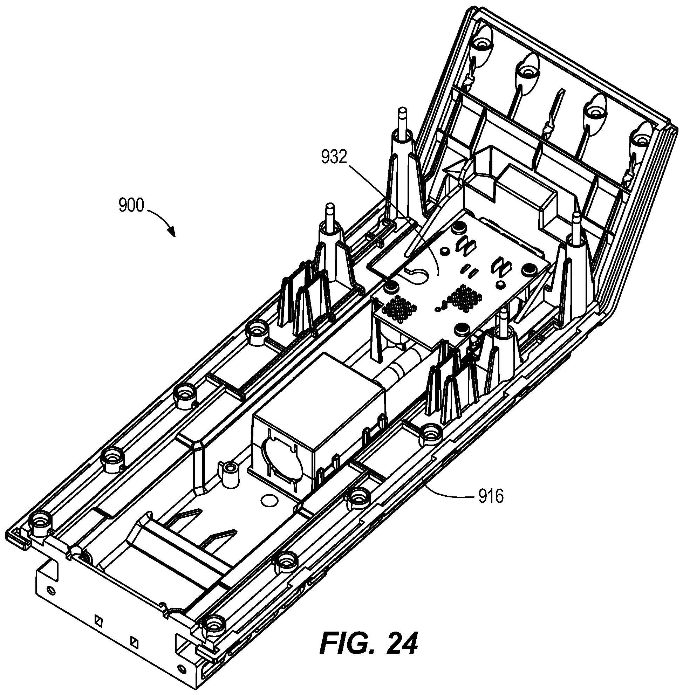

With reference to FIG. 24, the adapter 900 includes a printed circuit board ("PCB") 932 positioned within the adapter housing 904 and in electrical communication with the controller 200 (FIG. 1) via the cable 924. When the adapter 900 is attached to one of the plurality of power tools, the PCB 932 may be in electrical communication with that power tool.

With reference to FIG. 25, the electrical contacts of the electrical terminal 920 may include one or more electrical contacts that are partially or entirely coated with a silver-carbon coating. The electrical terminal 920 may be configured to transmit less than, approximately equal to, or greater than 60 amperes of continuous current. Other electrical terminals may be provided with a silver-carbon coating (for example, electrical terminals on battery packs, etc.).

Terms of relative position such as "front," "rear," "top," "bottom," "left," and "right" are used for the purpose of description only, and such terms may be change depending on the frame of reference used.

Although the invention has been described in detail with reference to certain preferred embodiments, variations and modifications exist within the scope and spirit of one or more independent aspects of the invention as described.

Various features of the invention are set forth in the following claims. When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. A portable power unit comprising:
   a battery pack interface configured to receive a battery pack;
   a power tool interface configured to electrically connect to an external power tool;
   a tool control circuit configured to generate a tool control signal, the tool control signal operable to control power provided to the external power tool;
   a bypass circuit configured to provide power from the battery pack to the external power tool; and
   a controller configured to:
      determine whether the external power tool is operable to be controlled by the tool control circuit, and
      control the bypass circuit to provide passthrough power to the power tool interface when the external power tool is not operable to be controlled by the tool control circuit.
2. The portable power unit of clause 1, wherein, to determine whether the external power tool is operable to be controlled by the tool control circuit, the controller is configured to:
   receive, via the power tool interface, a communication signal from the external power tool, the communication signal operable to provide an indication that the external power tool is operable to be controlled by the tool control circuitry, and
   control, in response to receiving the communication signal from the external power tool, the bypass circuitry to provide the tool control signal to the external power tool.
3. The portable power unit of clause 1, further comprising:
   a controller housing including the battery pack interface; and
   a cable having a first end and a second end, the first end coupled to the controller housing and the second end coupled to the power tool interface,
   wherein the power tool interface is configured to transmit electrical current from the battery pack attached to the battery pack interface to the external power tool to which the power tool interface is coupled.
4. The portable power unit of clause 3, further comprising:
   a backplate to which the controller housing is releasably attachable; and
   rigging supported by the backplate, wherein the rigging is configured to be worn by a user for supporting the backplate and controller housing on a body of the user.
5. The portable power unit of clause 3, wherein the power tool interface includes a housing, a pair of opposed rails spaced from the housing, and a pair of opposed recesses defined between the housing and the respective rails.
6. The portable power unit of clause 5, wherein the battery pack interface includes a pair of opposed rails to which the battery pack is slidably attachable.
7. The portable power unit of clause 6, wherein the battery pack interface includes a latch positioned between the guide rails and engageable with the battery pack to secure the battery pack to the battery pack interface.
8. The portable power unit of clause 3, wherein the battery pack interface includes an electrical interface extending from the controller housing with which the battery pack is electrically connectable.
9. The portable power unit of clause 8, wherein the electrical interface includes a plurality of electrical contacts that are electrically connectable with corresponding electrical contacts on the battery pack.
10. A portable power unit comprising:
   a controller housing including a battery pack interface configured to receive a battery pack;
   a power tool interface configured to selectively couple to a plurality of power tools in an interchangeable manner; and
   a cable having a first end and a second end, the first end coupled to the controller housing and the second end coupled to the power tool interface,
   wherein the power tool interface is configured to transmit electrical current from the battery pack attached to the battery pack interface to a power tool to which the power tool interface is coupled.
11. The portable power unit of clause 10, wherein the power tool interface includes a housing, a pair of opposed rails spaced from the housing, and a pair of opposed recesses defined between the housing and the respective rails.
12. The portable power unit of clause 11, wherein the battery pack interface includes a pair of opposed rails to which the battery pack is slidably attachable.
13. The portable power unit of clause 12, wherein the battery pack interface includes a latch positioned between the guide rails and engageable with the battery pack to secure the battery pack to the battery pack interface.
14. The portable power unit of clause 10, wherein the battery pack interface includes an electrical interface extending from the controller housing with which the battery pack is electrically connectable.
15. The portable power unit of clause 14, wherein the electrical interface includes a plurality of electrical contacts that are electrically connectable with corresponding electrical contacts on the battery pack.
16. The portable power unit of clause 10, further comprising:
   a backplate to which the controller housing is releasably attachable; and
   rigging supported by the backplate, wherein the rigging is configured to be worn by a user for supporting the backplate and controller housing on a body of the user.
17. The portable power unit of clause 16, wherein the controller housing includes a first side on which the battery pack interface is located and an opposite, second side defining a guide slot, and wherein the backplate includes a pair of opposed flanges that are received within the guide slot when the controller housing is attached to the backplate.
18. The portable power unit of clause 17, further comprising a latch disposed on the second side of the controller housing for selectively securing the controller housing to the backplate.
19. The portable power unit of clause 18, wherein the latch is biased toward a locking position, and wherein the portable power unit further comprises an actuator configured to move the latch from the locking position toward a release position.
20. The portable power unit of clause 19, wherein the latch and the actuator are positioned on adjacent sides of the controller housing.
21. The portable power unit of clause 10, wherein the battery pack is a first battery pack, and wherein the power tool interface is in the form of an adapter that selectively interfaces with a plurality of various power tools in the same manner as and in place of a second battery pack.
22. The portable power unit of clause 21, wherein the first battery pack and the second battery pack have the same outer dimensions.
23. The portable power unit of clause 10, wherein the battery pack is a first battery pack, wherein the power tool interface is a plug, and wherein the plug electrically couples to a bypass port of a second battery pack.
24. A system comprising:
   a portable power unit including
      a controller housing including a battery pack interface configured to receive a battery pack,
      a power tool interface configured to selectively couple to a plurality of power tools in an interchangeable manner, and
      a cable having a first end and a second end, the first end coupled to the controller housing and the second end coupled to the power tool interface,
      wherein the power tool interface is configured to transmit electrical current from the battery pack attached to the battery pack interface to a power tool to which the power tool interface is coupled; and
   a submersible pump to which the power tool interface is electrically connectable for supplying electrical current from the battery pack to the submersible pump.
25. A system comprising:
   a portable power unit including
      a controller housing including a battery pack interface configured to receive a first battery pack,
      a cable having a first end and an opposite second end, the first end being coupled to the controller housing;
   a power tool; and
   a second battery pack directly connectable to the power tool, the second battery pack including a bypass port to which the second end of the cable is connectable when the second battery pack is directly connected to the power tool,
   wherein the power tool is configured to receive electrical current from the first battery pack via the cable and the bypass port.
26. The system of clause 25, further comprising a dust extractor including a hose configured to connect to the power tool, wherein the hose is configured to extract dust created during operation of the power tool and transport the dust through the hose and away from the power tool.
27. The system of clause 25, wherein the second battery pack is interchangeably connectable to a plurality of power tools.
28. An adapter for use with a power tool, the adapter comprising:
   a first interface configured to couple to the power tool; and
   a second interface configured to couple to a battery pack, wherein the battery pack is incapable of being directly attached to the power tool;
   wherein the adapter transmits power from the battery pack to the power tool.
29. The adapter of clause 28, wherein the adapter includes battery cells.
30. The adapter of clause 28, wherein the adapter includes a bypass port.
31. A system comprising:
   a percussion tool including
      a housing,
      an electric motor supported by the housing,
      a percussion mechanism driven by the motor and including a striker supported for reciprocation in the housing, and
      a first battery terminal supported on the housing operable to receive a battery pack; and
   a portable power unit including
      a second battery terminal operable to receive a battery pack,
      a cable including a first end coupled to the second battery terminal and a second end including a connector configured to engage the first battery terminal,
   wherein
   the battery pack is alternatively coupled to the first and second battery terminals to provide power to the motor.
32. The system of clause 31, wherein the portable power unit includes straps to allow a user to carry the portable power unit.
33. The system of clause 31, wherein the connector is coupled to a power port defined on the housing of the percussion tool.
34. The system of clause 33, wherein, when the battery pack is coupled to the second battery terminal, electrical current is transferred from the second battery terminal through the cable and to the motor to power the motor.
35. The system of clause 31, wherein the portable power unit includes an electrical contact that is at least partially coated with a silver-carbon coating.

## Claims

1. A portable power unit comprising:
a battery pack interface configured to receive a battery pack;
a power tool interface configured to electrically connect to an external power tool;
a tool control circuit configured to generate a tool control signal, the tool control signal operable to control power provided to the external power tool;
a bypass circuit configured to provide power from the battery pack to the external power tool; and
a controller configured to:
determine whether the external power tool is operable to be controlled by the tool control circuit, and
control the bypass circuit to provide passthrough power to the power tool interface when the external power tool is not operable to be controlled by the tool control circuit.

2. The portable power unit of claim 1, wherein, to determine whether the external power tool is operable to be controlled by the tool control circuit, the controller is configured to:
receive, via the power tool interface, a communication signal from the external power tool, the communication signal operable to provide an indication that the external power tool is operable to be controlled by the tool control circuitry, and
control, in response to receiving the communication signal from the external power tool, the bypass circuitry to provide the tool control signal to the external power tool.

3. The portable power unit of claim 1 or 2, further comprising:
a controller housing including the battery pack interface; and
a cable having a first end and a second end, the first end coupled to the controller housing and the second end coupled to the power tool interface,
wherein the power tool interface is configured to transmit electrical current from the battery pack attached to the battery pack interface to the external power tool to which the power tool interface is coupled,
and optionally further comprising:
a backplate to which the controller housing is releasably attachable; and
rigging supported by the backplate, wherein the rigging is configured to be worn by a user for supporting the backplate and controller housing on a body of the user.

4. The portable power unit of any preceding claim, wherein the power tool interface includes a housing, a pair of opposed rails spaced from the housing, and a pair of opposed recesses defined between the housing and the respective rails, preferably wherein the battery pack interface includes a pair of opposed rails to which the battery pack is slidably attachable, preferably still wherein the battery pack interface includes a latch positioned between the guide rails and engageable with the battery pack to secure the battery pack to the battery pack interface, and/or
wherein the battery pack interface includes an electrical interface extending from the controller housing with which the battery pack is electrically connectable, preferably wherein the electrical interface includes a plurality of electrical contacts that are electrically connectable with corresponding electrical contacts on the battery pack.

5. A portable power unit comprising:
a controller housing including a battery pack interface configured to receive a battery pack;
a power tool interface configured to selectively couple to a plurality of power tools in an interchangeable manner; and
a cable having a first end and a second end, the first end coupled to the controller housing and the second end coupled to the power tool interface,
wherein the power tool interface is configured to transmit electrical current from the battery pack attached to the battery pack interface to a power tool to which the power tool interface is coupled.

6. The portable power unit of claim 5, wherein the power tool interface includes a housing, a pair of opposed rails spaced from the housing, and a pair of opposed recesses defined between the housing and the respective rails,
preferably wherein the battery pack interface includes a pair of opposed rails to which the battery pack is slidably attachable,
preferably still wherein the battery pack interface includes a latch positioned between the guide rails and engageable with the battery pack to secure the battery pack to the battery pack interface,
and/or wherein the battery pack interface includes an electrical interface extending from the controller housing with which the battery pack is electrically connectable, preferably wherein the electrical interface includes a plurality of electrical contacts that are electrically connectable with corresponding electrical contacts on the battery pack.

7. The portable power unit of claim 5 or 6, further comprising:
a backplate to which the controller housing is releasably attachable; and
rigging supported by the backplate, wherein the rigging is configured to be worn by a user for supporting the backplate and controller housing on a body of the user,
preferably wherein the controller housing includes a first side on which the battery pack interface is located and an opposite, second side defining a guide slot, and wherein the backplate includes a pair of opposed flanges that are received within the guide slot when the controller housing is attached to the backplate,
optionally the portable power unit further comprising a latch disposed on the second side of the controller housing for selectively securing the controller housing to the backplate, preferably wherein the latch is biased toward a locking position, and wherein the portable power unit further comprises an actuator configured to move the latch from the locking position toward a release position, more preferably wherein the latch and the actuator are positioned on adjacent sides of the controller housing.

8. The portable power unit of claim 5, 6 or 7, wherein:
the battery pack is a first battery pack, and wherein the power tool interface is in the form of an adapter that selectively interfaces with a plurality of various power tools in the same manner as and in place of a second battery pack, preferably wherein the first battery pack and the second battery pack have the same outer dimensions, or
the battery pack is a first battery pack, wherein the power tool interface is a plug, and wherein the plug electrically couples to a bypass port of a second battery pack.

9. A system comprising:
a portable power unit including
a controller housing including a battery pack interface configured to receive a battery pack,
a power tool interface configured to selectively couple to a plurality of power tools in an interchangeable manner, and
a cable having a first end and a second end, the first end coupled to the controller housing and the second end coupled to the power tool interface,
wherein the power tool interface is configured to transmit electrical current from the battery pack attached to the battery pack interface to a power tool to which the power tool interface is coupled; and
a submersible pump to which the power tool interface is electrically connectable for supplying electrical current from the battery pack to the submersible pump.

10. A system comprising:
a portable power unit including
a controller housing including a battery pack interface configured to receive a first battery pack,
a cable having a first end and an opposite second end, the first end being coupled to the controller housing;
a power tool; and
a second battery pack directly connectable to the power tool, the second battery pack including a bypass port to which the second end of the cable is connectable when the second battery pack is directly connected to the power tool,
wherein the power tool is configured to receive electrical current from the first battery pack via the cable and the bypass port.

11. The system of claim 10, further comprising a dust extractor including a hose configured to connect to the power tool, wherein the hose is configured to extract dust created during operation of the power tool and transport the dust through the hose and away from the power tool and/or wherein the second battery pack is interchangeably connectable to a plurality of power tools.

12. An adapter for use with a power tool, the adapter comprising:
a first interface configured to couple to the power tool; and
a second interface configured to couple to a battery pack, wherein the battery pack is incapable of being directly attached to the power tool;
wherein the adapter transmits power from the battery pack to the power tool.

13. The adapter of claim 12, wherein the adapter includes battery cells and/orwherein the adapter includes a bypass port.

14. A system comprising:
a percussion tool including
a housing,
an electric motor supported by the housing,
a percussion mechanism driven by the motor and including a striker supported for reciprocation in the housing, and
a first battery terminal supported on the housing operable to receive a battery pack; and
a portable power unit including
a second battery terminal operable to receive a battery pack,
a cable including a first end coupled to the second battery terminal and a second end including a connector configured to engage the first battery terminal,
wherein
the battery pack is alternatively coupled to the first and second battery terminals to provide power to the motor.

15. The system of claim 14, wherein the portable power unit includes straps to allow a user to carry the portable power unit, and/or
wherein the connector is coupled to a power port defined on the housing of the percussion tool, preferably wherein, when the battery pack is coupled to the second battery terminal, electrical current is transferred from the second battery terminal through the cable and to the motor to power the motor, and/or
wherein the portable power unit includes an electrical contact that is at least partially coated with a silver-carbon coating.
